# EUROPÄISCHE PATENTSCHRIFT

(11) **EP 1 913 116 B1**
(45) Veröffentlichungstag und Bekanntmachung des Hinweises auf die Patenterteilung: **17.01.2018**
(21) Anmeldenummer: 06762133.4
(22) Anmeldetag: 22.06.2006
(51) Int. Cl.: C10B 49/20, C10B 53/02, C10C 5/00

(54) **VERFAHREN ZUR SCHNELLPYROLYSE VON LIGNOCELLULOSE**
METHOD FOR THE RAPID PYROLYSIS OF LIGNOCELLULOSE
PROCEDE DE PYROLYSE RAPIDE DE LIGNOCELLULOSE

(30) Priorität: 11.08.2005 DE 102005037917
(43) Veröffentlichungstag der Anmeldung: 23.04.2008
(73) Patentinhaber: Karlsruher Institut für Technologie, 76131 Karlsruhe (DE)
(72) Erfinder: HENRICH, Edmund, 76706 Dettenheim (DE); WEIRICH, Friedhelm, 76689 Neuthard (DE); DINJUS, Eckhard, 76774 Leimersheim (DE)
(86) Internationale Anmeldenummer: PCT/EP2006/005985
(87) Internationale Veröffentlichungsnummer: WO 2007/017005

(56) Entgegenhaltungen:
- CA-A1- 2 351 892
- GB-A- 793 518
- HENRICH E ET AL: "FLUGSTROMVERGASUNG VON FLUESSIGEN PYROLYSEPRODUKTEN BEI HOHEM DRUCK: EIN NEUES KONZEPT ZUR BIOMASSEVERGASUNG" DGMK TAGUNGSBERICHT, HAMBURG, DE, Bd. 22, Nr. BIS 24, April 2002 (2002-04), Seiten 95-102, XP001126938 ISSN: 1433-9013 in der Anmeldung erwähnt

## Beschreibung

Die Erfindung betrifft ein Verfahren zur Schnellpyrolyse von Lignocellulose gemäß des ersten Patentanspruchs. Das Verfahren ist wesentlicher Bestandteil einer Verfahrenskette zur Erzeugung von Synthesegasen aus Biomasse wie Lignocellulose, d.h. cellulose- und ligninhaltiger (lat.: Lignum = Holz) Stoffe wie z.B. Holz, Stroh, Heu, aber auch Papier.

Eine Schnellpyrolyse dient der Umsetzung von kohlenstoffhaltigen Einsatzstoffen wie Biomasse in viel flüssiges Pyrolysekondensat (Pyrolyseöl) sowie wenig festen Pyrolysekoks und Pyrolysegas. Eine Schnellpyrolyse erfolgt bei der vorgenannten Biomasse als Einsatzstoff unter Sauerstoffausschluss innerhalb weniger Sekunden vorzugsweise in etwa einer Sekunde bei ca. 400 bis 600°C, vorzugsweise um 500°C, wobei sich typischerweise ein Anteil an Bioöl von 40 bis 80 Gew.% und an Biokoks von nur 10 bis ca. 30 Gew.% einstellt.

Die Schnellpyrolyse - auch als Blitzpyrolyse bekannt - ist somit eine spezielle Pyrolysemethode, bei der besonders viel flüssiges Pyrolysekondensat und wenig Gas und Koks entstehen. Insbesondere lassen sich Holz und Stroh (Lignocellulose) zu über 40 % bis zu 80 % zu Bioöl verflüssigen (vgl. [1]).

Der Wärmebedarf für eine Schnellpyrolyse wird in der Regel durch Verbrennen von Pyrolysekoksen oder Pyrolysegasen oder einer Kombination von beiden gedeckt. Bei einer gut geführten Schnellpyrolyse liegt der Heizwert der Pyrolysegase - abhängig vom Einsatzstoff - in der Größenordnung des Bedarfs, d.h. im Bereich um 10% des Biomasseheizwertes oder sogar etwas darunter. Der Heizwert des Koksanteils übersteigt den Bedarf in der Regel deutlich, um mehr als das Doppelte, so dass nur eine Teilmenge gebraucht wird.

Typisch für praktisch alle Schnellpyrolyse-Verfahren ist eine allotherme Verfahrensführung. Bei den Verfahren, die einen Wärmeträger verwenden, wird dieser im Kreislauf geführt, weil es ansonsten schwierig ist, eine ausreichende Wärmetauscherfläche in dem relativ kleinen Volumen des Pyrolysereaktors unterzubringen. Zumeist wird im Wärmeträgerkreislauf ein zweiter vom Pyrolysereaktor gasseitig getrennter Wirbelschicht-Verbrennungsreaktor installiert, in dem Pyrolysegas oder meist ein Teil des Pyrolysekokses mit Luft verbrannt werden und den Wärmeträger direkt im Wirbelbett geregelt aufheizen. Dabei können verschiedene Probleme auftreten, wie beispielsweise die Handhabung niedrigschmelzender Asche, potenzielle Risiken einer Bildung toxischer Chloro-Dioxine und -Furane, unvollständige CO-Verbrennung, etc. Durch eine indirekte Aufheizung des Wärmeträgers von außen in einem Wärmetauscher, können derartige Probleme vermieden werden, allerdings wegen der begrenzten Wärmedurchgangskoeffizienten auf Kosten eines größeren technischen Aufwandes.

Bei mechanisch fluidisierten Reaktoren wie z.B. Schnecken-Reaktoren (z.B. Doppelschnecken-Mischreaktoren) wird ein Wärmeträgerbett mit partikelförmigen Festkörpern (Körner) eines Wärmeüberträgers mechanisch gemischt und transferiert. Hierzu wird aufgrund seiner großen spezifischen Oberfläche ein relativ feinkörniger radial gut durchmischter Wärmeträger für eine effiziente und schnelle Übertragung einer Wärmemenge auf die Lignocellulose eingesetzt.

In [1] wird eine Anlage zur thermischen Behandlung von Materialien und Verfahren beispielhaft beschrieben. Sie umfasst einen Doppelschneckenreaktor mit zwei parallel zueinander angeordnet gleichsinnig drehenden und dabei ineinander greifenden Förderschnecken, in dem ein kontinuierlicher Biomassenfluss mit einem kontinuierlichen Sand- oder Koksfluss als Wärmeüberträger für mehrere Sekunden auf eine Temperatur um 500°C erhitzt wird.

Alternativ offenbart **[2]** einen einfachen Schneckenreaktor mit einem Drehofen mit Reaktionszone, in der eine Förderschnecke zum Transport von Biomasse und Wärmeüberträgerpartikeln angeordnet ist. Die Wärmeträger werden durch Kugeln aus Metall, Keramik oder Siliziumkarbid (Hartstoff) gebildet.

Bei der üblichen Verwendung der vorgenannten Wärmeüberträgerpartikel wie auch Quarzsand und ähnlichem spröden Material bildet sich im Wärmeträgerkreislauf bei jedem Durchgang eine kleine Menge sehr feiner Abrieb, der mit dem Pyrolysekoks ausgetragen und abgetrennt wird. Auch der Koks wird beim ersten Durchgang nicht sofort vollständig ausgetragen, sondern reichert sich besonders bei mechanischer Förderung im umlaufenden Wärmeträger bis zu einem Gleichgewichtswert an. Die Anwesenheit von mehr Koks kann unerwünschter weise zu schnelleren Zersetzung der Dämpfe an den katalytisch wirkenden Koks- und Asche-Oberflächen beitragen und so die organischen Kondensatausbeuten reduzieren.

Davon ausgehend liegt die **Aufgabe der Erfindung** darin, ein verbessertes Verfahren zur Schnellpyrolyse von Lignocellulose vorzuschlagen, das insbesondere die Gefahr von unerwünschter Verunreinigung des Pyrolysekondensats und des Pyrolysekokses durch Abrieb erheblich reduziert.

Die Aufgabe wird durch ein Verfahren mit den Merkmalen von Anspruch 1 gelöst. Die Unteransprüche geben vorteilhafte Ausgestaltungen wieder.

Der Grundgedanke der Erfindung liegt darin, die Lignocellulose vor der Eingabe in den Pyrolysenreaktor nicht nur zu zerkleinern, sondern in einer der Pyrolyse vorgeschalteten Wärmebehandlung vollständig zu trocknen, womit bei einer Schnellpyrolyse die Verdampfungswärmemenge nicht mehr zusätzlich aufgebracht werden muss. Unter einer vollständigen Trocknung wird im Rahmen der Erfindung eine Entfernung von mindestens 99 % des freien, d.h. nicht in der Lignocellulose gebundenen Wasseranteils umfasst. Da die Verdampfungswärme bei einer Schnellpyrolyse nicht mehr aufgebracht werden muss, ist auch die während der Schnellpyrolyse von den Wärmeübertragungspartikeln auf die Lignocellulosepartikel zu übertragende Wärmemenge geringer. Für eine gleiche Aufheizrate der Lignocellulose sind insbesondere nur noch kleinere Wärmeübertragungsoberflächen erforderlich, was grundsätzlich größere Wärmeübertragungspartikel zulässt. Größere Partikel stellen aus Sicht einer einfachen Handhabung einen enormen Vorteil dar, da sie sich nach erfolgter Schnellpyrolyse durch einen Sieb- oder Rüttelprozess wesentlich einfacher von den feinkörnigen Pyrolyseprodukten, insbesondere dem Pyrolysekoks trennen lassen. Die Wärmebehandlung dient aber auch einer Vorwärmung der Biomasse vor dem Einleiten in die Schnellpyrolyse, d.h. einer weiteren Energieeinsparung sowie der besseren Temperaturführung der Schnellpyrolyse (kleinerer Temperaturunterschied und damit weiter reduzierter Wärmemengenbedarf).

Die vorgenannte Trocknung erfolgt vorzugsweise über eine reine Wärmebehandlung unter Umgebungsdruck, ist aber auch durch einen von diesem abweichenden, vorzugsweise niedrigeren Druck oder durch eine besonders trockene, d.h. eine mit Wasser besonders ungesättigte Atmosphäre unterstützbar oder ersetzbar.

Die Verhältnisse (Druck, Temperatur, Atmosphäre), insbesondere die Temperatur dieser Wärmebehandlung richten sich nach den Dampfdrücken und zu entfernenden flüchtigen Bestandteilen (Wasser), wobei die Zersetzungsbedingungen der zu pyrolysierenden Biomasse nicht erreicht werden dürfen. Vorzugsweise findet die Wärmebehandlung drucklos unter Luft bei einer Temperatur zur Prozessbeschleunigung oberhalb der Siedetemperatur von Wasser (100°C), nämlich oberhalb 120°C oder vorzugsweise 130°C statt, wobei die obere Grenze durch eine beginnende Zersetzung, Geruchsbildung sowie der Zündtemperatur der Lignocellulose bei ca. 200°C, vorzugsweise bei 170 bis 180°C liegt. Die bevorzugten Werte beinhalten dabei einen Sicherheitsabstand zu den anderen Werten, da bei einer vorgenannten Wärmebehandlung der Lignocellulosepartikel immer eine Wärmeübertragung erfolgt und dabei mit lokalen Temperaturschwankungen zu rechnen ist.

Vorzugsweise erfolgt die Trocknung zur Vermeidung von Sauerstoffreaktionen oder Vorverbrennungen der Lignocellulose mit einem sauerstoffarmen Gas wie einem Abgas. Das Abgas kann dabei aus einem Verbrennungsprozess von Pyrolysegas, ein Teil (z.B. des minderwertigen Teils) des Pyrolysekokses abgeleitet werden.

Beim Trocknen und Aufheizen der Biomasse (Lignocellulose) vor der Schnellpyrolyse sind die Gefahren einer Zersetzung und einer Selbstentzündung bis zu den bevorzugten Temperaturen von ca. 170 bis 180°C selbst an Luft sehr gering und können in praxi ausgeschlossen werden. Auch die Geruchsbildung bleibt moderat (zumindest bei den meisten Stoffen) und lässt sich beherrschen. Ohne Vorwärmung müsste die für die Vorwärmung erforderliche Wärmemenge im Schnellpyrolysereaktor selbst zusätzlich aufgebracht werden, was insbesondere bei einem zeitlich limitierten Reaktordurchlauf eine entsprechend aufwendigere und damit teurere Verfahrensführung erforderlich macht. Das betrifft vor allem einen höheren Wärmübertragungspartikelumlauf (bezogen auf den Bio-Massestrom und damit dem Wärmemengenstrom) und den höheren Wärmeeintrag (höhere Wärmübertragungsraten) bei höherer Temperatur als beim Vorheizen, alternativ aber auch einen geringeren Durchsatz an zu pyrolysierender Lignocellulose. Bei optimal gewählten Betriebsparametern kann mit dem gleichen Wärmeüberträgerumlauf mit einem trockenen, vorgeheizten Feed (Biomasse, Lignocellulose) der Durchsatz mehr als verdoppelt werden. Beim Versuchsbetrieb wurden je nach Einsatzstoff sogar Steigerungen bis über das dreifache beobachtet.

Die Wärmebehandlung bzw. Trocknung erfolgt vor der Zerkleinerung der Lignocellulose, wobei eine Entwässerung allein grundsätzlich auch im Rahmen einer längeren Trockenlagerung bei Temperaturen unterhalb der Wassersiedetemperatur erfolgen kann.

Eine stark vorgewärmte zerkleinerte Biomasse (Feed) bietet in Verbindung mit einem relativ groben Wärmeträger eine Reihe von Vorteilen. Mit vorgeheizten Feed wird der Wärmebedarf bei der Pyrolyse drastisch reduziert, weil das freie Wasser in der Biomasse bereits verdampft ist und das Aufheizen von Zimmertemperatur bis zur beginnenden Zersetzung um 180 bis 200°C etwa 1/3 der fühlbaren Wärme bis zur Pyrolyseendtemperatur um 500°C ausmacht.

Die Verminderung des Wärmeverbrauchs wird zudem zusätzlich dadurch erzielt, dass ein großer Teil des Pyrolyseumsatzes speziell von Lignocellulose zwischen etwa 270 bis um 400°C exotherm, d.h. unter Selbstaufheizung abläuft. Die exotherm entstandene Wärme braucht in vorteilhafter Weise nicht mehr von außen zugeführt werden. Die auf diese Weise erzielte zusätzliche Einsparung ist von der Konsistenz (z.B. Zusammensetzung, spezifische Oberfläche, Heizwert etc.) der zu pyrolysierenden Lignocellulose und den Pyrolysebedingungen an sich, insbesondere von den Aufheizraten und den Haltezeiten der Schnellpyrolyse abhängig. Je mehr CO₂ und CH₄ sich beispielsweise unter den Pyrolyseprodukten findet, umso stärker ist die Wärmeentwicklung.

Bei einer Vorwärmung der Lignocellulosepartikel auf eine Temperatur zwischen 170 und 200°C ist für die Durchführung der Schnellpyrolyse ein schnelles Aufheizen der Lignocellulosepartikel nur um ca. 70 bis 100°C erforderlich, um die vorgenannte Temperatur von 270°C zum Start der vorgenannten exothermen Reaktion (weitere Selbstaufheizung) zu erreichen. Welcher Wärmebedarf für diese Pyrolysesektion notwendig ist, muss daher nicht unbedingt bekannt sein.

Die für eine Aufheizung der Lignocellulosepartikel in einer Schnellpyrolyseanlage erforderliche Wärmezufuhr wird durch Trocknen und Vorheizen in vorteilhafter Weise auf ein Minimum reduziert. Dies lässt einerseits eine reduzierte Menge an Wärmeübertragungspartikeln und damit der zur Verfügung stehenden absoluten Wärmemenge, aber auch vorzugsweise Wärmeübertragungspartikeln mit einer für eine schnelle Wärmeübertragung zwar ungünstigeren, aber für eine anschließende Abtrennung der Pyrolyseprodukte von den Wärmeübertragungspartikeln umso günstigeren kleinen spezifischen Oberfläche zur Wärmeübertragung ohne Reduzierung der absoluten Wärmemenge zu, wobei die technische Umsetzung vorzugsweise allein über eine Vergrößerung der Wärmeübertragungspartikel realisiert wird.

Ein Gedanke der Erfindung auch liegt darin, die vorgenannte große für eine schnelle Wärmeübertragung grundsätzlich günstige spezifische Oberfläche des Wärmeüberträgers zugunsten einer großen zugänglichen spezifischen Oberfläche der zu pyrolysierenden Lignocellulose zu reduzieren. Praktisch umgesetzt bedeutet dies, dass die Wärmeüberträgerpartikel eine bestimmte im Vergleich zu Sand größere Mindestgröße aufweisen, während gleichzeitig die Lignocellulose vor Zuführung in die Schnellpyrolyse zu kleinen Lignocellulosepartikel, vorzugsweise durch Schreddern, Sägen, Mahlen und/oder Häxeln in der Größenordnung von Sägemehl oder Späne, zerkleinert wird, vorzugsweise von maximal ca. 3 mm Größe.

Durch eine hohe spezifische Oberfläche der so konfektionierten Lignocellulose erfolgt in vorteilhafter Weise eine besonders schnelle Erhitzung der zu pyrolysierenden Biomasse. Aufgrund einer guten Anbindung des gesamten Lignocellulosevolumens an oberflächennahe Bereiche erfolgt die Erhitzung der gesamten Biomasse zudem in besonders homogener Weise, was für eine Schnellpyrolyse in vorteilhafter Weise eine gezielte und exakte Temperaturführung, besonders schnelle Temperaturwechsel der Biomasse oder Pyrolysprodukte und gleichzeitig eine homogenere Pyrolysegrad von Pyrolysekondensat und Pyrolysekoks ermöglicht und auch den Wärmebedarf im Schnellpyrolysereaktor reduziert.

Ein reduzierter geringerer Wärmebedarf im Schnellpyrolysereaktor lässt sich auch mit einer kleineren Fläche ausreichend schnell übertragen, insbesondere dann, wenn die zu pyrolysierende Lignocellulose die vorgenannte schnelle Wärmeaufnahme und Wärmedurchdringung zulässt. In einem solchen Fall ist ein grobkörniger Wärmeüberträger mit einer bevorzugten Partikelgröße größer 3 mm, weiter vorzugsweise zwischen 6 und 16 mm, ausreichend, der sich durch eine höhere Wärmekapazität pro Oberfläche ausgezeichnet, damit sich in vorteilhafter Weise bei einer Wärmeabfuhr an die Lignocellulose weniger schnell abkühlt und somit eine gleichmäßigere Temperatur beim Pyrolysevorgang erwarten lässt.

Vorzugsweise weisen die Wärmeüberträgerpartikel zur Reduzierung von abrasiven Abrieb (tribologischer Verschleiß der Partikel) eine abgerundete Form, vorzugsweise eine Kugelform auf. Abrieb während einer Schnellpyrolyse sollte vermieden werden, da er sich bevorzugt im Pyrolysekoks ansammelt und einen abrasiven Verschleiß in den der Schnellpyrolyse nachgeschalteten Verfahrensschritten, insbesondere in den Düsenanordnungen eines Flugstromvergasers oder in den Pumpen- und Ventilanordnungen für Zwischenprodukte (Slurry) im Rahmen einer Biomassenvergasung beschleunigt. Ein reduzierter Abrieb in den Pyrolyseprodukten reduziert daher in vorteilhafter Weise diesen abrasiven Verschleiß. Insbesondere soll das schnelle Ausschleifen der Brennstoffdüsen im Flugstromvergaser vermieden werden.

Vorzugsweise besteht der Wärmeträger aus einem abriebfesten Werkstoff mit (ausreichend) guter Wärmleitfähigkeit wie Keramik, SiC oder Al₂O₃, aber auch Quarz, Graphit, Hartstoffe oder bevorzugt aber ein entsprechend geeignetes Metall bzw. einer Legierung wie vorzugsweise Inconel oder Incoloy, die eine ausreichende Resistenz gegen Chlor und Salzsäure aufweisen. In einer bevorzugten Ausführungsform weisen die Wärmeübertragungspartikel eine Verschleißschutzschicht oder einen Verschleißschutzschichtverbund auf, die mindestens eine Schicht aus einem Hartstoff oder einem Hartmetall aufweisen. Die Partikel selbst können dann Materialien mit besonders günstigen thermischen Eigenschaften, wie z.B. eine hohe Wärmeleitfähigkeit oder Wärmekapazität herangezogen werden.

Bei guter Wärmeleitfähigkeit und Temperaturfestigkeit der Wärmeüberträgerwerkstoffe können zum Aufheizen dieser bevorzugt ungequenchte Verbrennungsgase direkt verwendet werden, was weitere technische Vereinfachungen im Wärmüberträgerkreislauf erlaubt. Große Partikel reduzieren zudem den Durchströmungswiderstand durch eine Schüttung mit heißen Verbrennungsgasen beim Aufheizen (geringerer Druckverlust). Ferner erfolgt im Rahmen eines Wärmeübertragungspartikelumlaufs eine gasseitige Absperrung des Reaktors von der Heizsektion nicht mehr wie bei Sand durch lange Sperrstecken, sondern in vorteilhafter Weise bevorzugt durch Zell- oder Zahnradschleusen oder vergleichbare Einrichtungen erreicht werden.

Ein weiterer wesentlicher Vorteil der vorgenannten Kombination aus großen Wärmeübertragungspartikel und zerkleinerter Lignocellulose liegt in der guten Trennbarkeit von Wärmeübertragungspartikel und Pyrolysekoks nach der Schnellpyrolyse. Ein grobkörniger Wärmeüberträger (große Wärmetragungspartikel) gestattet oder begünstigt nämlich eine fast vollständige mechanische Koksabtrennung z.B. durch Ausblasen oder über ein Sieb. Sind die Wärmeübertragungspartikel zudem koksfrei oder koksarm, d.h. brennstoffarm, eignen sie sich besonders für Einsatzzyklen in der Schnellpyrolyse, umfassend z.B. ein externes Aufheizen (vorzugsweise auf eine Temperatur zwischen 500 und 650°C, vorzugsweise aufgeheizt durch einen direkten Kontakt mit einem heißen Verbrennungsgas einer Verbrennung von vorzugsweise Pyrolysegas und/oder Pyrolysekoks mit vorgewärmter Luft), ein Rückführen in den Pyrolysereaktor zur Wärmeabgabe und einer erneuten Wiederaufheizung. Koksfreie (oder besonders koksarme) Wärmeübertragungspartikel gestatten insbesondere eine direkte Aufheizung mit dem heißen Rauchgas aus der Verbrennung von Pyrolysekoks oder Pyrolysegas, ohne dass größere z.B. bei der pneumatischen Sandförderung bekannte Schwierigkeiten beim Aufheizen durch z. T. nicht unerheblichen Brennwert begleitender (z.B. anhaftender) und mit verschleppter hochreaktiver Pyrolysekoksreste zu erwarten sind. Insbesondere bestehen bei größeren anhaftenden Pyrolysekoksresten Risiken einer Koksverbrennung mit Aschefreisetzung oder einer Bildung toxischer Chloro-Dioxine und Furane, was besondere, meist teure Maßnahmen zur sicheren Beherrschung dieser Stoffe beinhaltet.

Das Durchmischen von Wärmeüberträgerpartikel und Lignocellulosepartikel (Biomasse, Feed) erfolgt vorzugsweise im Schnellpyrolysereaktor und beim Vermischen mechanisch, beispielsweise durch ein Drehrohr mit Einbauten, durch eine Einfachschnecke, durch gleichsinnig rotierende, ineinander kämmende Doppelschnecken oder unter Mithilfe der Gravitation bzw. einer Kombination von beidem während einer Verweilzeit von 1 bis 100 Sekunden, bevorzugt von 3 bis 30 Sekunden im Schnellpyrolysereaktor. Dieser ist bevorzugt so ausgelegt, dass nur ein geringer Teil des Pyrolysekokses mit den Pyrolysegasen und Dämpfen ausgetragen wird, so dass auf eine Koksstaub-Abtrennung mit einem Heißzyklon verzichtet werden kann.

Nach Verlassen des Pyrolysereaktors kann der im Gas mitgetragene Koksstaub nie vollständig zurückgehalten werden. Ablagerungen und Leitungsverlegungen mit Teer/Koks-Schmieren gehören aufgrund unserer Betriebserfahrungen zu den häufigsten und schwerwiegendsten Betriebsstörungen bei einer Schnellpyrolyse. Weniger Koksstaub in den Gasen und Dämpfen verringert dieses Risiko erheblich und erhöht so die Zuverlässigkeit und Zeitverfügbarkeit der Anlagen. Insbesondere die Auslegung der Kondensatgewinnung wird einfacher und der Kondensationsbetrieb erfolgt zuverlässiger.

Das Verlegungsrisiko von Leitungen durch Ablagerung hochviskoser Koks/Teer-Schmieren nach dem Pyrolysereaktor ist hoch und ihre Beseitigung kann die Zeitverfügbarkeit der Anlagen drastisch vermindern. In den Versuchsanlagen wurde gefunden, dass der Austrag von Pyrolysekokspulver aus dem Pyrolysereaktor in den Heißzyklon und teilweise darüber hinaus in die Kondensate durch geringe konstruktive Änderungen zur Änderung der Gasgeschwindigkeit am Reaktorausgang, zum Teil erheblich bis auf weniger als 20% reduziert werden kann. Durch weniger Koks kann die störende Schmierenbildung drastisch vermindert und die Anlagenverfügbarkeit entsprechend noch gehalten werden.

In einer bevorzugten Ausführungsform werden die Wärmeüberträgerpartikel (z.B. nach vorangegangenem Lift z.B. in einem Becherwerk) unter Nutzung der kinetischen Energie z.B. in einer abgeschlossenen Fallstrecke vor dem eigentlichen Schnellpyrolysereaktor mit den Lignocellulosepartikeln über Verwirbelungen gut vermischt, sodass in den eigentlichen Pyrolysreaktor schon eine homogene Mischung eingetragen wird.

Eine weitere Ausführungsform wird das in der Schellpyrolyse gewonnene Pyrolysegas zum Antrieb eines Gasmotors (z.B. zum Antrieb eines Stromgenerators) genutzt, wobei die heißen, sauerstoffarmen Motorabgase zum Trocknen und Aufheizen der Lignocellulose und/oder der Wärm-überträgerpartikel heranziehbar sind. Ebenso lassen sich hierfür auch die Heißgase bei einer Verbrennung eines Teils des Pyrolysekokses verwenden.

Die Erfindung wird anhand von Ausführungsbeispielen mit Figuren näher erläutert. Es zeigen
**Fig.1a** **und b** schematisch den Ablauf des Verfahrens zur Schnellpyrolyse von Lignocellulose sowie
**Fig.2** einen beispielhaften Aufbau einer Vorrichtung zur Schnellpyrolyse von Lignocellulose.

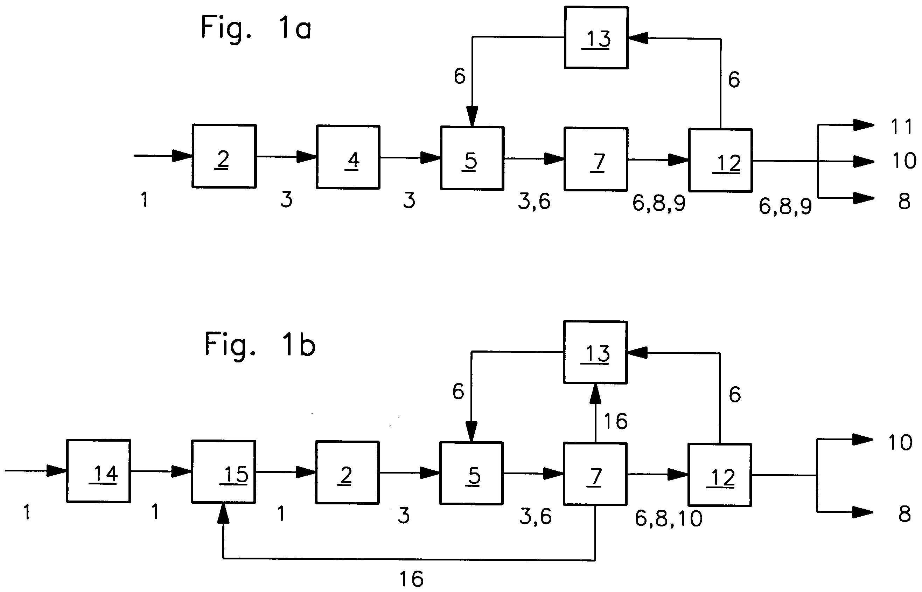

Ein mögliche Ablaufschema des Verfahrens gemäß der Erfindung ist in **Fig.** 1b dargestellt. Fig.1a stellt eine einfache nicht-erfindungsgemäße Vorgehensweise dar, während **Fig.1b** ein optimiertes erfindungsgemäßes Verfahren wiedergibt.

Gemäß **Fig.1a** wird in einem ersten Schritt Lignocellulose **1** als Stoffstrom einer mechanischen Zerkleinerung **2** und anschließend als Lignocelulosepartikel **3** einer Trocknung **4** zugeführt. Getrocknet, vorzugsweise auch auf 170 bis 200°C vorgewärmt werden die Lignocelulosepartikel dann einer Vermischung **5** mit Wärmeübertragungspartikeln **6** zugeführt, um gemeinsam eine Schnellpyrolyse **7** zu durchlaufen. Im Rahmen der Schnellpyrolyse erfolgt der Stofftransport vorzugsweise durch eine oder mehrere Förderschnecken.

Im Rahmen der Vermischung und der Schnellpyrolyse kommt es zu der vorgenannten sehr schnellen Erwärmung der vorzugsweise vorgewärmten Lignocellulosepartikel. Diese erfolgt durch Wärmeübertragung der auf über 350°C bevorzugt auf ca. 500 bis 650°C aufgeheizten Wärmübertragungspartikel **6** auf die Lignocellulosepartikel, vorzugsweise von einer Vorwärmtemperatur zwischen 170 bis 200°C auf die vorgenannte untere Starttemperatur für den exotherme Ablauf der Pyrolyse, die bei etwa 270°C (kann je nach Reaktionspartner zwischen 150 und 300°C variieren). Im Rahmen der Schnellpyrolyse **7** erfolgt die weitere Aufheizung der zu pyrolysierenden Lignocellulosepartikel beschleunigt durch den vorgenannten exothermen Ablauf auf eine Pyrolysetemperatur, bevorzugt zwischen 400 und 650°C.

Der Durchlauf durch die Schnellpyrolyse **7** findet unter Sauerstoffausschluss bei vorgenannter Temperatur zwischen 400 und 650°C statt und dauert zwischen einer und 100 Sekunden, vorzugsweise zwischen einer und zehn Sekunden, weiterhin bevorzugt zwischen einer und drei Sekunden. Dabei reagieren die Lignocellulosepartikel **3** zu Pyrolysekoks **8** und Pyrolysekondensat **9** (Pyrolyseöl **10** und Pyrolysegas **11**), welche im Rahmen einer Stofftrennung **12** gequencht, d.h. innerhalb von 0,1 bis 5 Sekunden vorzugsweise zwischen 0,1 und 1 Sekunden auf eine Temperatur unter 200°C abgekühlt, und von den Wärmeübertragungspartikein **6** vorzugsweise in einem Rüttelsieb getrennt werden. Die Quenchung bewirkt auch eine Auftrennung des Pyrolysekondensats **9** in kondensiertes flüssiges Pyrolyseöl **10** und einer gasförmigen Komponente, dem Pyrolysegas **11**. Während Pyrolysekoks **8**, Pyrolyseöl 10 und Pyrolysegas **11** einer weiteren Verwertung zugeführt werden, erfolgt für die Wärmeübertragungspartikel im Rahmen eines Stoffkreislaufes eine Aufheizung **13** auf vorgenannte Temperaturen und erneute Rückführung in die vorgenannte Vermischung **5**.

Gemäß der Verfahrensvariante gemäß **Fig.1b** wird die Lignocellulose durch Lagerung **14** getrocknet einer Vorwärmung **15** auf ca. 170 bis 200°C zugeführt. Erst darauf, d.h. unmittelbar vor der Zuführung der Lignocellulose in die Vermischung **5** und Schnellpyrolyse **7** erfolgt die Zerkleinerung **2** zu Lignocellulosepartikeln **3**.

Der besondere Vorteil der späten Zerkleinerung liegt in der Verfahrenssicherheit. Die spezifische Oberfläche und damit eine erhöhte Reaktivität der Lignocellulose erfolgt nämlich erst kurz vor der Schnellpyrolyse, d.h. für die bei einer Vorwärmung zu erwartenden Vorabreaktionen wie Entzündungen oder Zersetzungen bleibt im Zusammenhang mit der erhöhten Reaktivität nur ein kleines Zeitfenster zur Verfügung. Zudem lässt sich der Verfahrensschritt der Zerkleinerung bevorzugt in der für die Schnellpyrolyse erforderlichen besonderen sauerstoffarmen Atmosphäre des Stoffsstroms integrieren. Dies ist auch für eine moderate Erhöhung der Vorwärmtemperatur auf Temperaturen zwischen 190 und 220°C vorzugsweise zwischen 190°C und 200°C im Rahmen der Vorwärmung **15** nutzbar.

Alternativ erfolgt die Vorwärmung **15** und die Zerkleinerung **2** in einem gemeinsamen Verfahrensschritt, wobei sich ebenfalls das Zeitfenster für vorgenannte Vorabrekationen reduzieren lässt.

Während der Schnellpyrolyse erfolgt eine Vorabtrennung der gasförmigen Pyrolyseprodukte **16**, vorzugsweise des Pyrolysegases **11** sowie anderer bei der vorgenannten Schnellpyrolysetemperatur gasförmig auftretenden Pyrolyseprodukte. Diese werden dann einer Verbrennung zugeführt, wobei die Verbrennungswärme direkt oder über die Abgase zur Energiezufuhr für die Aufheizung 13 und der Vorwärmung **15**, aber auch optional für die Trocknung **2** (Energiezufuhr hier nicht dargestellt) heranziehbar sind. Der besondere Vorteil von Abgasen liegt zudem in deren Mangel an freien Sauerstoffmolekülen, welche auch einen Einsatz zur Temperierung bei einer Schnellpyrolyse begünstigen.

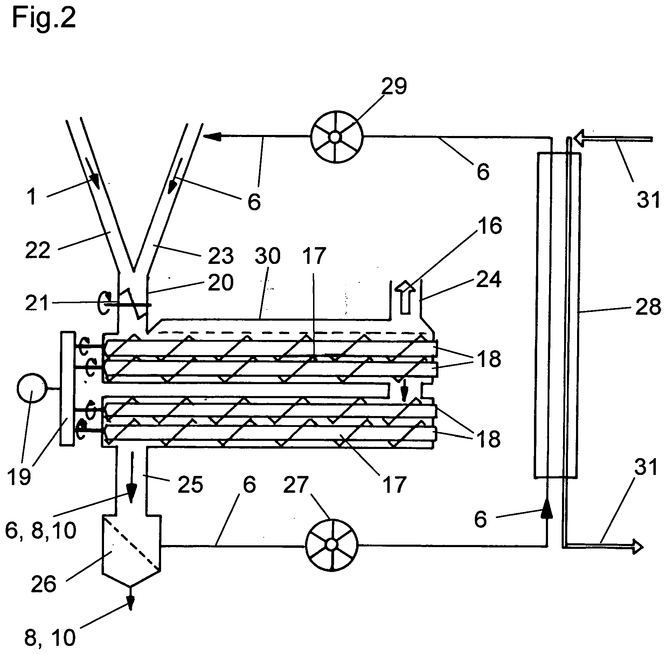

Einen beispielhaften Aufbau einer Vorrichtung zur Durchführung des vorgenannten Verfahrens zur Schnellpyrolyse von Lignocellulose zeigt **Fig.2****.** Zentrales Element der Vorrichtung ist der Pyrolysenreaktor **17** (Mischreaktor) mit zwei hintereinander geschaltete über einen Getriebemotor **19** angetriebene Doppelschnecken **18** mit je zwei parallel zueinander angeordnet gleichsinnig drehenden und dabei ineinander greifenden Förderschnecken zur Durchführung der Schnellpyrolyse. Der Pyrolysenreaktor vorgeschaltet ist eine Vormischkammer **20**, optional mit einem austauschbaren mechanischen Mischer **21** sowie je eine Zuführungen **22, 23** für die vorgewärmte Lignocellulosepartikel (**22**) und die Wärmeübertragungspartikel (**23**). Optional kann die Vormischkammer auch vertikal längere Fallstrecke konzipiert sein.

Der Pyrolysenreaktor weist zudem an einer Stelle, bevorzugt mittig an einer zum umgebenden Innenraumvolumens des Reaktors höher liegenden Stelle, einen Gasaustritt **24** für gasförmige Pyrolyseprodukte **16** (Pyrolysegase und Pyrolysedämpfe wie auch Koksstaub), ggf. einen Dom **30,** welcher als Gassammelvolumen den oberen Teil des Pyroylsenreaktors großflächig überspannt sowie am Ende der durch die Doppelschnecken **18** gebildeten Schnellpyrolysestrecke einen gemeinsamen Austritt **25** für die Wärmeübertragungspartikel **6,** Pyrolysekoks **8** und Pyrolyseöl **10** mit nach geschalteter Trennkammer **26** (z.B. Rüttelsieb) auf. In der Trennkammer erfolgt im Rahmen vorgenannter Stofftrennung eine Abtrennung der koksarmen Wärmeübertragungspartikel **6**, die dann mit ca. 400 bis 500°C durch eine ersten Zellradschleuse **27** (Fluid- und Gasbarriere) einem Gegenstromwärmetauscher **28** zugeführt werden, dort auf ca. 500 bis 600°C aufgeheizt und nach dem Passieren einer zweiten Zellradschleuse **29** (Fluid- und Gasbarriere) in die vorgenannte Vormischkammer zugeführt werden. Vorzugsweise wird der Gegenstromwärmetauscher über einen heißen Rauchgasstrom **31** einer nicht weiter dargestellten Wärmekraftmaschinen, befeuert durch die gasförmigen Pyrolyseprodukte **16**, gespeist und damit temperiert.

### Literatur:

[1] E. Henrich, E. Dinjus, D. Maier: Flugstromvergasung von flüssigen Pyrolyseprodukten bei hohem Druck - Ein neues Konzept zur Biomassenvergasung; DGMK-Tagung: Energetische Nutzung von Biomassen, Velen 22.-24. April 2002
[2] EP 1 354 172 B1

### Bezugszeichenliste:

- 1: Lignocellulose
- 2: Zerkleinerung
- 3: Lignocelulosepartikel
- 4: Trocknung / Vorwärmung
- 5: Vermischung
- 6: Wärmeübertragungspartikel
- 7: Schnellpyrolyse
- 8: Pyrolysekoks
- 9: Pyrolysekondensat
- 10: Pyrolyseöl
- 11: Pyrolysegas
- 12: Stofftrennung
- 13: Aufheizung
- 14: Lagerung
- 15: Vorwärmung
- 16: gasförmige Pyrolyseprodukte
- 17: Pyrolysenreaktor
- 18: Doppelschnecken
- 19: Getriebemotor
- 20: Vormischkammer
- 21: mechanischer Mischer
- 22: Zuführung für Lignocellulosepartikel
- 23: Zuführung für Wärmeübertragungspartikel
- 24: Gasaustritt
- 25: Austritt
- 26: Trennkammer
- 27: erste Zellradschleuse
- 28: Gegenstromwärmetauscher
- 29: zweite Zellradschleuse
- 30: Dom
- 31: Rauchgsstrom

## Patentansprüche

1. Verfahren zur Schnellpyrolyse von Lignocellulose, umfassend die folgenden Verfahrensschritte:
a) eine Wärmebehandlung, umfassend eine vollständige Trocknung und eine Vorwärmung der Lignocellulose (**1)**,
b) Mechanische Zerkleinerung (**2**) der Lignocellulose (**1**) zu Lignocellulosepartikeln (**3**),
c) Vermischen (**5**) der Lignocellulosepartikel mit Wärmeübertragungspartikeln (**6**) zu einer Mischung, wobei die Wärmeübertragungspartikel vor dem Vermischen auf eine Temperatur zwischen 500°C und 650°C aufgeheizt sind sowie
d) Aufheizung der Lignocellulosepartikel unter Sauerstoffausschluss durch die Wärmeübertragungspartikel in einem Pyrolysereaktor, wobei sich für eine bis 50 Sekunden eine Temperatur zwischen 400 bis 600°C einstellt und die Lignocellulosepartikel zu Pyrolysekoks (**8**), Pyrolysekondensat (**9**) und Pyrolysegas (**11**) reagieren
**dadurch gekennzeichnet, dass**
e) die Wärmebehandlung auf eine Temperatur zwischen 120 und 200°C unter einer sauerstoffarmen Atmosphäre erfolgt sowie
f) das Vermischen unmittelbar nach der Zerkleinerung, jene nach der Vorwärmung und jene nach der Trocknung erfolgt.

2. Verfahren nach Anspruch 1, umfassend eine Trennung (**12**) von Wärmeübertragungspartikel und Pyrolysekoks durch einen Siebprozess.

3. Verfahren nach Anspruch 1 oder 2, wobei das Verfahren ein kontinuierliches Verfahren ist, wobei die Lignocellulose als kontinuierlicher Stoffstrom einfach und die Wärmeübertragungspartikel als rezyklierender Stoffkreislauf wiederholt beteiligt sind, wobei die Wärmeübertragungspartikel im Stoffkreislauf außerhalb des und gasseitig getrennt vom Pyrolysereaktor aufgeheizt werden.

4. Verfahren nach Anspruch 3, wobei die Wärmeübertragungspartikel in direktem Kontakt mit einem heißen Verbrennungsgas einer Verbrennung aufgeheizt werden.

5. Verfahren nach Anspruch 4, wobei die Verbrennung eine Verbrennung von Pyrolysegas und/oder Pyrolysekoks mit vorgewärmter Luft umfasst.

6. Verfahren nach einem der vorgenannten Ansprüche, wobei das Pyrolysegas, ein Teil des Pyrolysekokses oder ein minderwertiger Teil des Pyrolysekokses in einem Verbrennungsprozesses verbrannt wird, wobei das dabei entstehende sauerstoffarme Abgas zur Trocknung herangezogen wird.

7. Verfahren nach einem der vorgenannten Ansprüche, wobei die Wärmeübertragungspartikel durch Körner aus Metall, Keramik oder Hartstoff bestehen, die einen Durchmesser größer 3 mm aufweisen.

8. Verfahren nach Anspruch 7, wobei die Kugeln ganz oder teilweise aus einer HCl-beständigen Legierung bestehen.

9. Verfahren nach einem der vorgenannten Ansprüche, wobei die Wärmeübertragungspartikel mit einer Verschleißschutzschicht oder einem Verschleißschutzschichtverbund, umfassend mindestens eine Schicht aus einem Hartstoff oder einem Hartmetall, beschichtet sind.

10. Verfahren nach einem der vorgenannten Ansprüche 1 bis 9, wobei das Vermischen vor Eintritt in den Pyrolysereaktor nach einer Eingabe der Wärmeübertragungspartikel und der Lignocellulosepartikel im freien Fall erfolgt.

11. Verfahren nach einem der vorgenannten Ansprüche 1 bis 9, wobei das Vermischen im Pyrolysereaktor durch ein Drehrohr mit Einbauten, durch eine Einfachschnecke, durch gleichsinnig rotierende, ineinander kämmende Doppelschnecken und / oder unter Mithilfe der Gravitation erfolgt.

## Claims

1. Method for the rapid pyrolysis of lignocellulose, comprising the following method steps:
a) a heat treatment, comprising a complete drying and a preheating of the lignocellulose (1),
b) mechanical comminution (2) of the lignocellulose (1) to lignocellulose particles (3),
c) mixing (5) the lignocellulose particles with heat transferring particles (6) so as to obtain a mixture, wherein the heat transferring particles are heated before the mixing to a temperature of between 500 °C and 650 °C, and
d) heating the lignocellulose particles with the exclusion of oxygen by means of the heat transferring particles in a pyrolysis reactor, wherein, for one to 50 seconds, a temperature between 400 to 600 °C is set, and the lignocellulose particles react to pyrolysis coke (8), pyrolysis condensate (9), and pyrolysis gas (11),
**characterised in that**
e) the heat treatment takes place to a temperature of between 120 and 200 °C under a low-oxygen atmosphere, and
f) the mixing takes place immediately after the comminution, and that in turn after the preheating, and that in turn after drying.

2. Method according to claim 1, comprising a separation (12) of heat transferring particles and pyrolysis coke by a screening process.

3. Method according to claim 1 or 2, wherein the method is a continuous method, wherein the lignocellulose is involved as a continuous substance flow as a single event and the heat transferring particles are involved repeatedly as a recycling substance circuit, wherein the heat transferring particles are heated up in the substance circuit outside the pyrolysis reactor and separated from it on the gas side.

4. Method according to claim 3, wherein the heat transferring particles are heated up in direct contact with a hot combustion gas from a combustion process.

5. Method according to claim 4, wherein the combustion process comprises a combustion of pyrolysis gas and/or pyrolysis coke with preheated air.

6. Method according to any one of the preceding claims, wherein the pyrolysis gas, a part of the pyrolysis coke, or a lower-value part of the pyrolysis coke, is combusted in a combustion process, wherein the low-oxygen waste gas thereby incurred is drawn on for the drying process.

7. Method according to any one of the preceding claims, wherein the heat transferring particles consist of grains of metal, ceramics, or other hard material, which exhibit a diameter greater than 3 mm.

8. Method according to claim 7, wherein the spheres consist in whole or in part of an HCl-resistant alloy.

9. Method according to any one of the preceding claims, wherein the heat transferring particles are coated with a wear-protection layer or a wear-protection coating composite, comprising at least one layer formed from a hard substance or a carbide or hard metal.

10. Method according to any one of the preceding claims 1 to 9, wherein the mixing takes place before the entry into the pyrolysis reactor after the introduction of the heat transferring particles and the lignocellulose particles in free fall.

11. Method according to any one of the preceding claims 1 to 9, wherein the mixing takes place in the pyrolysis reactor through a rotating pipe with installed elements, by a single-screw conveyor, by twin-screw conveyors rotating in the same direction meshing with one another, and/or with the assistance of gravitation.

## Revendications

1. Procédé de pyrolyse rapide de lignocellulose comprenant les étapes suivantes consistant à :
a) effectuer un traitement thermique comprenant un séchage total et un préchauffage de la lignocellulose (1),
b) broyer mécaniquement (2) la lignocellulose (1) pour obtenir des particules de lignocellulose (3),
c) mélanger (5) les particules de lignocellulose avec des particules de transfert de chaleur (6) pour obtenir un mélange, les particules de transfert de chaleur étant chauffées avant le mélange à une température comprise entre 500°C et 650°C,
d) chauffer les particules de lignocellulose dans une atmosphère exempte d'oxygène par les particules de transfert de chaleur dans un réacteur de pyrolyse, une température comprise entre 400 et 600°C se réglant pendant une à 50 secondes, et les particules de lignocellulose réagissant pour obtenir du coke pyrolytique (8), un condensa pyrolytique (9) et un gaz de pyrolyse (11),
**caractérisé en ce que**
e) le traitement thermique est effectué à une température comprise entre 120 et 200°C sous une atmosphère pauvre en oxygène, et
f) le mélange est effectué immédiatement après le broyage, après le préchauffage ou après le séchage.

2. Procédé conforme à la revendication 1, comportant une étape de séparation (12) des particules de transfert de chaleur et du coke de pyrolytique par un processus de criblage.

3. Procédé conforme à la revendication 1 ou 2, constitué par un procédé continu, la lignocellulose étant mise en oeuvre sous la forme d'un flux de manière continu et les particules de transfert de chaleur étant mises en oeuvre de manière répétitive sous la forme d'un circuit de matière de recyclage, et les particules de transfert de chaleur étant chauffées dans le circuit de matière à l'extérieur du réacteur de pyrolyse et de manière séparée du côté gaz de celui-ci.

4. Procédé conforme à la revendication 3, selon lequel les particules de transfert de chaleur sont chauffées par contact direct avec un gaz de combustion chaud d'une combustion.

5. Procédé conforme à la revendication 4, selon lequel la combustion comprend une combustion de gaz de pyrolyse et/ou de coke pyrolytique avec de l'air préchauffé.

6. Procédé conforme à l'une des revendications précédentes, selon lequel le gaz de pyrolyse, une partie du coke pyrolytique ou une partie de valeur médiocre du coke pyrolytique est brûlé dans un processus de combustion, les gaz d'échappement pauvres en oxygène ainsi produits étant utilisés pour le séchage.

7. Procédé conforme à l'une des revendications précédentes, selon lequel les particules de transfert de chaleur sont constituées par des grains en métal, céramique ou matériau dur ayant un diamètre supérieur à 3 mm.

8. Procédé conforme à la revendication 7, selon lequel les billes sont réalisées en totalité ou en partie en un alliage résistant à HCl.

9. Procédé conforme à l'une des revendications précédentes, selon lequel les particules de transfert de chaleur sont revêtues d'une couche anti-usure, d'une couche composite anti-usure renfermant au moins une couche en un matériau dur ou en un métal dur.

10. Procédé conforme à l'une des revendications 1 à 9, selon lequel le mélange est effectué en chute libre avant l'entrée dans le réacteur de pyrolyse et après l'addition des particules de transfert de chaleur et des particules de lignocellulose.

11. Procédé conforme à l'une des revendications précédentes 1 à 9, selon lequel le mélange est effectué dans le réacteur de pyrolyse par un tube rotatif équipé de chicanes, par une vis transporteuse simple, par une hélice double à deux vis transporteuses tournant dans le même sens et engrenant l'une dans l'autre et/ou par gravitation.
